# EUROPEAN PATENT APPLICATION

(11) **EP 4 736 652 A1**
(43) Date of publication of application: **06.05.2026**
(21) Application number: 25212476.3
(22) Date of filing: 30.10.2025
(51) Int. Cl.: A21C 15/02, A21C 15/00, A23P 20/20

(54) **SYSTEM FOR FORMING SANDWICH PRODUCTS FROM FLAT BAKED GOODS WITH AN INTERMEDIATE LAYER OF VISCOUS EDIBLE MATERIAL**

(30) Priority: 30.10.2024 NL 2038953; 27.01.2025 NL 2039693
(71) Applicant: Royal Houdijk B.V., 3133 KS Vlaardingen (NL)
(72) Inventor: HOUDIJK, Bart, Vlaardingen (NL)
(74) Representative: Algemeen Octrooi- en Merkenbureau B.V.

(57) **Abstract**

A system for forming sandwich products from two or more flat baked goods, wherein between the flat baked goods a layer of viscous edible material is deposited, the system comprising a first conveyor for supplying a plurality of flat baked goods, wherein the plurality of flat baked goods is divided into a first group with the flat baked goods oriented with one of their two main surfaces facing downwards, and a second group with the flat baked goods oriented facing upwards; a second conveyor for supplying the viscous edible material; temperature control means disposed onto the second conveyor and arranged to achieve a predefined viscosity level of the viscous edible material by controlling its temperature; a first robotic manipulator configured to pick up the viscous edible material from the second conveyor after its viscosity has been adjusted to the predefined level, and to deposit the viscous edible material onto flat baked goods of the first group; a second robotic manipulator configured to pick up and place flat baked goods of the second group onto the viscous edible material deposited on the flat baked goods of the first group, thereby forming the sandwich products.

## Description

### TECHNICAL FIELD

The present invention generally relates to the field of food processing systems, and more particularly to the field of automated systems for forming sandwich products from flat baked goods with an intermediate layer of viscous edible material.

### BACKGROUND

Nowadays, automated systems for forming sandwich products from flat baked goods, such as cookies or biscuits, often involve the use of a gripper or manipulator that flips a portion of the baked goods to ensure proper alignment before applying a layer of cream or other edible material. These systems typically rely on rotating or flipping a portion of the incoming cookies so that one group is oriented with the top side facing downwards, while the remaining cookies retain their original orientation with the top side upwards. The next step in conventional systems involves depositing cream onto the flipped cookies, after which the unflipped cookies are placed on top to form the sandwich product.

A notable disadvantage of these conventional systems is the inherent complexity and limitations in handling viscous edible materials, such as cream or chocolate. To ensure the edible material can be deposited without clogging the deposition nozzles, it must maintain a sufficiently low viscosity. However, this presents a further challenge, as once deposited, the material still needs to adhere effectively to the cookie layers. Achieving this requires the edible material to cool down after deposition, allowing it to solidify and bond with the cookies. As a result, current systems often employ long processing lines, sometimes extending 10 or more meters, to allow for sufficient cooling time before the sandwiches can be further handled or packaged.

These lengthy processing lines are undesirable for several reasons. First, they occupy significant floor space, making production facilities less efficient in terms of layout. Moreover, while additional freezing units can be used to accelerate cooling, these solutions are also inefficient. The reason for this inefficiency lies in the insulating properties of the cookies, which retain heat and slow down the cooling process. Since the cookies act as insulators, cooling the edible material, such as cream or chocolate, becomes less effective, requiring additional time and energy to bring the product to a stable temperature. This process slows down production and increases operational costs.

It is therefore a goal of the present invention to provide an improved system for forming sandwich products that addresses these inefficiencies. The invention seeks to reduce the length of the processing lines and address the inefficiency of current solutions, thereby overcoming the above-mentioned disadvantages of the prior art at least in part.

### SUMMARY

One aspect of the present invention relates to a system for forming sandwich products from two or more flat baked goods, wherein between the flat baked goods a layer of viscous edible material is deposited, the system comprising:
a first conveyor for supplying a plurality of flat baked goods, wherein the plurality of flat baked goods is divided into a first group, with the flat baked goods oriented with one of their two main surfaces facing downwards, and a second group, with the flat baked goods oriented facing upwards;
a second conveyor for supplying the viscous edible material;
temperature control means disposed onto the second conveyor and arranged to achieve a predefined viscosity level of the viscous edible material by controlling its temperature;
a robotic manipulator configured to pick up the viscous edible material from the second conveyor after its viscosity has been adjusted to the predefined level, and to deposit the viscous edible material onto a flat baked good of the first group;
a robotic manipulator configured to pick up and place a flat baked good of the second group onto the viscous edible material deposited on the flat baked good of the first group, thereby forming a sandwich product;
wherein preferably the predefined viscosity of the viscous edible material is tuned to such an extent that it can be picked up and deposited by the robotic manipulator without deforming, while also allowing the viscous edible material to melt together with the flat baked good of the first and second group during the sandwich formation process.

Another aspect of the present invention relates to a method of forming sandwich products from two or more flat baked goods, the method comprising the steps of:
- supplying a plurality of flat baked goods on a first conveyor, wherein the plurality of flat baked goods is divided into a first group, with the flat baked goods oriented with one of their two main surfaces facing downwards, and a second group, with the flat baked goods oriented facing upwards;
- supplying a layer of viscous edible material on a second conveyor;
- controlling the temperature of the viscous edible material using temperature control means disposed onto the second conveyor to achieve a predefined viscosity level suitable for handling;
- picking up the viscous edible material from the second conveyor using a first robotic manipulator after the viscosity has been adjusted to the predefined level;
- depositing the viscous edible material onto flat baked goods of the first group;
- picking up flat baked goods from the second group using a second robotic manipulator and placing them onto the viscous edible material deposited on the flat baked goods of the first group to form a sandwich product, wherein preferably the predefined viscosity of the viscous edible material is controlled such that discrete portions of the viscous edible material can be picked up and deposited by the robotic manipulator without deforming, while also allowing the viscous edible material to melt together with the flat baked good of the first and second group during the sandwich formation process.

Yet another aspect of the present invention relates to a method for depositing a layer of viscous edible material onto flat baked goods, the method comprising:
- supplying a plurality of flat baked goods on a first conveyor;
- supplying viscous edible material, either in a layer or in discrete portions, on a second conveyor;
- controlling the temperature of the viscous edible material using temperature control means disposed onto the second conveyor to achieve a predefined viscosity level suitable for handling;
- picking up the viscous edible material from the second conveyor using a first robotic manipulator after the viscosity has been adjusted to the predefined level;
- depositing the viscous edible material onto the flat baked goods, wherein preferably the predefined viscosity of the viscous edible material is controlled such that discrete portions of the viscous edible material can be picked up and deposited by the robotic manipulator without deforming, while also allowing the viscous edible material to melt together with the flat baked good of the first and second group during the sandwich formation process.

Another aspect of the present invention relates to a depositing system for applying a layer of viscous edible material (30) onto flat baked goods (20), the system comprising:
a first conveyor for supplying a plurality of flat baked goods;
a second conveyor for supplying the viscous edible material;
temperature control means disposed onto the second conveyor and arranged to achieve a predefined viscosity level of the viscous edible material by controlling its temperature;
a first robotic manipulator configured to pick up the viscous edible material from the second conveyor after its viscosity has been adjusted to the predefined level, and to deposit the viscous edible material onto the flat baked goods.

A sandwich product may be understood as a food item where two or more baked goods, such as cookies or biscuits, are placed on either side of an edible layer, such as cream or chocolate. Flat baked goods are typically bakery products with two main surfaces that are substantially planar, including but not limited to cookies, crackers, or biscuits.

The system comprises a first conveyor for supplying a plurality of flat baked goods, wherein the plurality of flat baked goods is divided into a first group, with the flat baked goods oriented with one of their two main surfaces facing downwards, and a second group, with the flat baked goods oriented facing upward. Preferably at least substantially half of the flat baked goods are oriented with one of their two main surfaces facing downwards and the other half facing upwards. Hence, the first group, being approximately half of the total, is facing downwards, the other half, i.e. the second group, facing upwards. Upwards or downwards is to be understood as that most goods, e.g. cookies, as part of the sandwich, have an inner and outer main surface. The inner surface is destined to face the edible layer, whereas the outer surface is facing outward and may comprise a logo, symbol, text or combination of such. A conveyor is a mechanical system designed to transport goods from one point to another along a controlled path. An effect of this arrangement is that it ensures the flat baked goods are prepared for subsequent processing steps, specifically the deposition of the viscous edible material and the formation of the sandwich structure. The orientation of the baked goods allows efficient handling during the assembly process and ensures that the top and bottom baked goods are correctly aligned for the final product.

The system further comprises a second conveyor for supplying a layer of viscous edible material. The term viscous edible material refers to semi-solid or flowable food substances such as cream, chocolate, or jam, which have a particular viscosity at a given temperature. The second conveyor ensures that the viscous edible material is transported in a controlled manner, facilitating its precise placement during the sandwich assembly process. An effect of using a second conveyor specifically for the viscous edible material is that it isolates the edible material handling from the baked goods handling, enhancing control over the deposition process and ensuring a cleaner, more efficient production line.

The system also includes temperature control means arranged on, in close proximity of, or integrated with the second conveyor and arranged to achieve a predefined viscosity level of the viscous edible material by controlling its temperature. Temperature control means refer to devices or systems, such as cooling units, that regulate the temperature of the edible material to achieve a specific viscosity suitable for manipulation. This arrangement ensures that the viscous edible material is at the optimal consistency for handling, preventing it from clogging the deposition nozzles or deforming during processing. An effect of controlling the temperature in this manner is the improved efficiency of the deposition process, as the material can be easily deposited onto the flat baked goods without causing delays or requiring manual intervention.

The system includes a robotic manipulator configured to pick up the viscous edible material from the second conveyor after its viscosity has been adjusted to the predefined level and to deposit the viscous edible material onto a flat baked good of the first group. A robotic manipulator is an automated mechanical arm designed to perform specific tasks such as picking, placing, or moving items along a production line. This arrangement ensures precise and consistent handling of the viscous edible material, allowing for accurate deposition onto the baked goods without deforming the material. The ability of the robotic manipulator to handle viscous edible material reduces manual handling, increases production speed, and minimizes errors related to material deformation.

The system further comprises a second robotic manipulator configured to pick up and place a flat baked good of the second group onto the viscous edible material deposited on the flat baked good of the first group, thereby forming a sandwich product. This second robotic manipulator may however also be the same as the first, hence, in this example, the system has one robotic manipulator which is configured both for handling the viscous edible material, and also to cap the top baked good on top thereof, to complete and form the sandwich assembly. This arrangement ensures the alignment and proper placement of the top baked good on the viscous edible material, completing the sandwich assembly. An effect of this arrangement is that it ensures the sandwich product is formed with the correct structure, with the edible material evenly distributed between the two baked goods. The robotic nature of the manipulator allows for consistent performance and reduces the likelihood of misalignment, which would otherwise result in defective products.

In this system, preferably, the predefined viscosity of the viscous edible material is tuned to such an extent that it can be picked up and deposited by the robotic manipulator without deforming, while also allowing the viscous edible material to melt together with the flat baked good of the first and second group during the sandwich formation process. The term predefined viscosity refers to a controlled level of thickness or fluidity that ensures the material can be manipulated without losing its shape but also bonds effectively with the baked goods. This arrangement ensures that the viscous edible material adheres properly to the baked goods, maintaining the integrity of the sandwich structure while also allowing the edible material to melt slightly to create a cohesive bond between the top and bottom baked goods. An effect of this tuning is the enhanced durability and quality of the final product, as the material not only holds its shape during handling but also melts just enough to secure the baked goods together during the sandwich formation.

In the context of the present disclosure flat baked goods refer to bakery products that are substantially planar, having two main flat surfaces. These products include, for example, cookies, biscuits, crackers, and wafers. Flat baked goods may come in various shapes, such as round, square, or rectangular, but their defining feature is that they possess two substantially parallel main surfaces. The term is intended to encompass products typically used in sandwich assembly processes, while excluding non-flat or irregularly shaped baked goods that are incompatible with such processes.

Viscous edible material refers to any food substance that has a semi-solid or flowable consistency, which can be manipulated and deposited at a controlled viscosity. Examples of viscous edible materials include cream, chocolate, jam, or other confectionery fillings. These materials require precise temperature control to achieve a viscosity suitable for handling by robotic systems without deformation. The term specifically excludes fully solid or hard edible products that do not require temperature control or viscosity adjustment.

Conveyor refers to a mechanical device used for moving materials or products along a controlled path within a production line. In the context of the present invention, conveyors are employed to transport flat baked goods and viscous edible material. Examples include belt conveyors and chain-driven conveyors, which may be designed to carry multiple items in parallel rows. The first conveyor refers to the conveyor dedicated to the transport of flat baked goods, while the second conveyor is designated for the supply of viscous edible material.

Robotic manipulator refers to a programmable mechanical arm or system designed for precise and automated movement, capable of picking, placing, and manipulating materials. In this invention, robotic manipulators handle both the viscous edible material and the flat baked goods to ensure accurate placement and assembly of the sandwich product without manual intervention. Examples of robotic manipulators include vacuum-based grippers or mechanical gripping arms, which are specifically designed to handle soft and delicate items without causing deformation or damage.

Temperature control means refer to any device or mechanism that regulates the temperature of a substance to achieve a desired physical state. In this invention, the temperature control means are disposed onto the second conveyor and are responsible for adjusting the temperature of the viscous edible material in order to achieve a predefined viscosity suitable for handling by the robotic manipulator. Examples of temperature control means include cooling units, refrigeration systems, or precision temperature control zones integrated into the conveyor system. The function of the temperature control means is to ensure that the viscous edible material is in an optimal state for manipulation, avoiding issues such as clogging or deformation while maintaining its ability to bond effectively with the baked goods.

The term viscosity refers to the internal resistance of a fluid to flow, and in the context of the present invention, the viscosity of the viscous edible material is critical for handling and deposition. The predefined viscosity may vary depending on the type of edible material and the specific requirements of the product being formed. For example, the viscosity of the edible material may fall within the broad range of 1 to 100,000 centipoise (cP), covering various cookie fillings from thin liquids to thick pastes. More typical for sandwich product applications is the medium-broad range of 10 to 50,000 cP, which includes most cookie fillings. A more specific range may be 100 to 20,000 cP, suitable for creams, batters, and nut butters, while many common applications may lie within the narrow range of 1,000 to 10,000 cP, encompassing batters, frostings, and certain melted chocolates. Examples of materials within these ranges include melted butter (18-20 cP), cream with varying fat content (e.g., 30% fat cream at 14 cP and 50% fat cream at 112 cP), melted chocolate at 120°F (approximately 17,000 cP), honey at 100°F (1,500 cP), and frosting or icing, which can range from 2,000 to 10,000 cP. These values ensure that the material can be handled by robotic manipulators without deforming while maintaining optimal texture for product formation. The viscosity of the material can be measured using standardized methods, such as those defined by ASTM D445 or ISO 3219, depending on the nature of the material and the required precision in viscosity control.

The viscosity of the viscous edible material may be adjusted or tuned or controlled by its temperature to achieve a predefined viscosity level suitable for handling by a robotic manipulator. This tuning is essential to ensure that the material is firm enough for precise manipulation, yet flexible enough to bond with the flat baked goods during the sandwich formation process. For example, cooling viscous materials such as melted chocolate to approximately 15-18°C can increase its viscosity to the required level, while creams or jams may require cooling to 5-10°C to achieve optimal viscosity for handling. The temperature control means, such as refrigeration units or cooling zones integrated into the second conveyor, ensure gradual and uniform cooling of the edible material. The system may be configured to adjust the viscosity dynamically based on real-time measurements, ensuring consistent handling and deposition of the material. This tuning ensures that the material achieves the proper balance between being stable enough to maintain its form during transfer and malleable enough to melt slightly during bonding with the flat baked goods.

The term "without deforming" refers to the ability of the viscous edible material to maintain its structural integrity during handling and deposition by the robotic manipulator. In this context, the material must be sufficiently stable to retain its intended shape when picked up and deposited, but also flexible enough to melt or bond effectively with the flat baked goods. The material should not collapse, spread, or sag during the transfer process. This stability is achieved by tuning the viscosity of the edible material to a level where it can withstand the forces applied by the robotic manipulator while still allowing it to bond with the baked goods during the sandwich formation. The material's structural stability during handling ensures precision in deposition and reduces the likelihood of deformities in the final product, while its flexibility ensures that it can fuse with the baked goods, maintaining the integrity and quality of the sandwich product.

In an example, the system for forming sandwich products may comprise a second conveyor for supplying the viscous edible material, wherein the second conveyor operates in a counter-flow direction, opposite to the direction of movement of the first conveyor, for supplying the flat baked goods. It may be provided that this counter-flow arrangement ensures that the viscous edible material and the flat baked goods are processed in a more coordinated manner, allowing for a streamlined production flow. An effect of this arrangement is that it maximizes the efficiency of the production line by reducing potential delays between the supply of baked goods and the deposition of the viscous edible material, as the materials converge toward the assembly point from opposite directions.

In an example, the system may comprise the first and second conveyors disposed in parallel, with the second conveyor positioned alongside the first conveyor, allowing for integrated and synchronized operation of both conveyors in the sandwich-forming process. It may be provided that this configuration allows for closer coordination between the conveyors, reducing the complexity of material handling and minimizing the distance that robotic manipulators must travel between picking up the viscous edible material and placing it on the baked goods. An effect of this arrangement is that it enhances the system's operational speed and precision, leading to improved production throughput and better alignment between the flat baked goods and the edible material.

In an example, the viscous edible material may be selected from the group consisting of cream, chocolate, jam, and other soft-set edible materials that solidify at a controlled low temperature. It may be provided that selecting these materials allows the system to work with a variety of semi-liquid substances, which can be adjusted to a suitable viscosity for handling by robotic manipulators. An effect of this arrangement is that it ensures the flexibility of the system to accommodate different product recipes while maintaining the integrity of the sandwich product during and after assembly.

In an example, the system may be configured such that the viscous edible material is shaped into discrete portions before being picked up by the robotic manipulator. It may be provided that pre-shaping the viscous edible material ensures that the material conforms to the desired size and shape before being placed onto the baked goods. An effect of this feature is that it increases the consistency and uniformity of the sandwich products, minimizing variations and ensuring that each product meets the required quality standards.

In an example, the shaping of the viscous edible material may be carried out on the second conveyor prior to being cooled to the predefined viscosity. It may be provided that shaping the material while it is still warm and malleable allows for greater precision in achieving the desired form. An effect of this feature is that it enables the system to work more efficiently by reducing the time required to handle and manipulate the edible material after cooling, thus improving the overall productivity of the system.

In an example, the shaping of the viscous edible material may be performed by the robotic manipulator during the pick-up process. It may be provided that this arrangement allows the robotic manipulator to shape and transfer the edible material in one continuous operation, reducing the need for separate shaping steps. An effect of this feature is that it simplifies the mechanical design of the system, leading to fewer components and operations, which improves both the reliability and speed of the production line.

In an example, the system may include temperature control means configured to lower the temperature of the viscous edible material to a predefined level suitable for handling by the robotic manipulator. It may be provided that these temperature control means ensure the material reaches the desired viscosity for manipulation without becoming too rigid or too fluid. An effect of this arrangement is that it allows the viscous edible material to be handled with greater precision, reducing the risk of deformation or sticking during the transfer process, which in turn improves the quality of the final sandwich product.

In an example, the temperature control means may comprise a cooling unit integrated into or adjacent to the second conveyor. It may be provided that having the cooling unit in close proximity to the second conveyor allows for more immediate control over the temperature of the viscous edible material as it moves through the system. An effect of this arrangement is that it enables rapid adjustments to the material's temperature, ensuring that the predefined viscosity is maintained throughout the production process, which enhances the consistency and performance of the system.

In an example, the cooling unit may comprise multiple cooling zones to gradually reduce the temperature of the viscous edible material. It may be provided that the use of multiple cooling zones allows for a controlled and gradual reduction in temperature, preventing the material from solidifying too quickly or unevenly. An effect of this feature is that it reduces the likelihood of thermal stress or inconsistencies in the material's texture, ensuring that the viscous edible material is properly prepared for deposition onto the flat baked goods without compromising its ability to bond effectively during the sandwich formation process.

In an example, the system may comprise flat baked goods selected from the group consisting of cookies, biscuits, crackers, and wafers. It may be provided that these flat baked goods are typically planar with two main surfaces, allowing for easy handling by conveyors and robotic manipulators. An effect of this arrangement is that the system can accommodate a variety of baked goods commonly used in sandwich products, ensuring flexibility in the types of products the system can produce while maintaining precise handling and alignment during the assembly process.

In an example, the flat baked goods may have a round, square, rectangular, or other predefined geometric shape. It may be provided that the system can process baked goods of different shapes, allowing for greater customization in product design. An effect of this feature is that the system can handle various shapes without requiring significant changes to the conveyor or manipulator setup, thus enhancing the versatility of the system and allowing for the production of a wide range of sandwich products.

In an example, the first conveyor may supply the flat baked goods in a random order or pattern. It may be provided that the random arrangement of the baked goods eliminates the need for precise upstream alignment, reducing complexity in the feeding process. An effect of this feature is that the system can handle irregular input flows, making it more robust and adaptable to different production environments where the baked goods are not consistently aligned or pre-arranged.

In an example, the system may further comprise a selection unit configured to categorize the flat baked goods into at least a first group and a second group based on their orientation. It may be provided that the selection unit is capable of detecting which baked goods need to be flipped or remain in their original orientation. An effect of this arrangement is that it ensures proper alignment of the baked goods for the sandwich formation process, improving the accuracy and consistency of the final products by ensuring that each sandwich is correctly assembled with the top and bottom goods oriented as required.

In an example, the selection unit may comprise a vision-based system for detecting the orientation of each flat baked good. It may be provided that this vision-based system uses optical sensors or cameras to analyze the position and orientation of the baked goods as they move along the conveyor. An effect of this feature is that it increases the accuracy of the selection process, ensuring that the system can quickly and reliably identify the orientation of each baked good, leading to more precise handling and placement by the robotic manipulators.

In an example, the first conveyor may supply the flat baked goods in a predetermined order or pattern. It may be provided that the use of a predetermined pattern ensures that the baked goods arrive in a consistent and predictable arrangement, simplifying the handling process. An effect of this feature is that it allows the system to operate more efficiently when dealing with consistent product flows, improving the overall speed and accuracy of the sandwich assembly process.

In an example, the robotic manipulator for picking up the viscous edible material may comprise a vacuum gripper or a mechanical gripping device. It may be provided that the vacuum gripper or mechanical gripping device is capable of securely handling the viscous edible material without causing deformation or damage. An effect of this arrangement is that it enables precise handling of delicate materials, ensuring that the viscous edible material can be deposited accurately onto the flat baked goods while maintaining its structural integrity during the process.

In an example, the robotic manipulator for the flat baked goods of the second group may also comprise a vacuum gripper or a mechanical gripping device. It may be provided that this arrangement allows for the secure and controlled handling of the baked goods, ensuring that the top portion of the sandwich is placed accurately onto the bottom portion without displacement. An effect of this feature is that it ensures consistent and precise placement of the baked goods during the sandwich formation process, reducing product defects and improving the overall quality of the final product.

In an example, the second robotic manipulator may be configured to align the second flat baked good with the first flat baked good prior to placement. It may be provided that this alignment ensures that the top and bottom baked goods are perfectly matched, with no misalignment during the sandwich formation. An effect of this feature is that it improves the appearance and structural integrity of the final sandwich product, reducing waste caused by misaligned sandwiches and enhancing the overall consistency of the production process.

In an example, the predefined viscosity of the viscous edible material may be adjusted based on the type of flat baked good to ensure proper adherence during the sandwich formation process. It may be provided that different types of baked goods may require different levels of viscosity to achieve optimal bonding with the edible material. An effect of this arrangement is that it ensures the system can produce high-quality sandwich products with various types of baked goods by fine-tuning the viscosity of the edible material to suit the specific product, improving adhesion and reducing the likelihood of product failure during handling and packaging.

In an example, the temperature control means may be further configured to adjust the viscosity of the viscous edible material based on ambient environmental conditions. It may be provided that this feature allows the system to adapt to temperature fluctuations, humidity levels, or other environmental factors that may affect the consistency of the viscous edible material. An effect of this feature is that it ensures consistent handling of the edible material, maintaining the predefined viscosity regardless of external conditions, thereby improving the reliability of the production process and reducing waste caused by inconsistent material properties.

In an example, the system may further comprise a post-sandwich cooling unit configured to solidify the viscous edible material after the sandwich formation process. It may be provided that this cooling unit rapidly cools the viscous edible material to ensure it solidifies properly, securing the flat baked goods together in the final sandwich product. An effect of this feature is that it increases the structural integrity of the sandwich products, preventing separation of the baked goods and ensuring the sandwich remains intact during packaging and distribution.

In an example, the post-sandwich cooling unit may be arranged downstream of the sandwiching process and may include an air cooling system or a refrigerated conveyor. It may be provided that placing the cooling unit immediately after the sandwich formation process ensures that the viscous edible material is solidified before the products move to the next stage, such as packaging. An effect of this feature is that it optimizes the workflow by maintaining the appropriate temperature throughout the process, reducing the risk of product deformation and ensuring consistent sandwich quality.

In an example, the robotic manipulator for depositing the viscous edible material may be configured to operate at a predefined speed and pressure to avoid deforming the viscous edible material. It may be provided that controlling the speed and pressure of the manipulator ensures that the edible material is deposited with precision and without causing unnecessary stress to the material. An effect of this feature is that it prevents deformation or spreading of the viscous material, maintaining its intended shape and improving the overall appearance and quality of the sandwich product.

In an example, the flat baked goods may be pre-heated to a slight residual temperature before the viscous edible material is deposited, to enhance adhesion. It may be provided that warming the baked goods slightly improves the bonding between the edible material and the baked goods, as the warm surface helps the viscous material spread and adhere more effectively. An effect of this feature is that it enhances the integrity of the sandwich product by ensuring better adhesion of the viscous edible material to the baked goods, reducing the risk of separation during handling or packaging.

In an example, the system may further comprise a control unit configured to synchronize the operation of the first and second robotic manipulators with the movement of the first and second conveyors. It may be provided that this control unit ensures that the conveyors and manipulators work in harmony, adjusting their speed and timing to match the flow of materials. An effect of this feature is that it improves the efficiency and accuracy of the production process, reducing errors caused by misalignment or delays and ensuring a smooth and continuous workflow.

In an example, the viscous edible material may be deposited in a pattern corresponding to the shape of the flat baked good. It may be provided that this feature allows for precise deposition of the edible material to match the specific shape of the baked goods, ensuring that the material is evenly distributed across the surface. An effect of this feature is that it improves the consistency and appearance of the final product by ensuring that each sandwich has the correct amount of edible material in the right location, reducing waste and improving product quality.

In an example, the first and second robotic manipulators are the same robotic manipulator.

Viscosity, in the context of the present disclosure and in the context of food processing and specifically for the production of sandwich products with flat baked goods, is a critical parameter that governs the behavior and handling of viscous edible materials such as creams, chocolates, and jams. Viscosity refers to the internal resistance of a fluid or semi-fluid to flow and is a measure of the material's thickness or consistency. For edible materials in this field, achieving the optimal viscosity level is important to ensure efficient deposition, maintain shape, and secure the integrity of the final product. Viscosity is typically measured in a standardized manner, often at a shear rate of 1 s⁻¹ and a temperature of 20°C, using instruments such as rheometers or viscometers. These devices provide precise control and repeatable measurements, which are vital for maintaining consistency in production.

Viscosity in the context of food processing can be categorized into classes based on the material's flow characteristics, providing a standardized reference for suitability in various applications. Very low viscosity materials, such as water or light oils, may range from 1 to 10 cP and exhibit high fluidity, making them generally unsuitable for maintaining shape or position. Low viscosity materials, such as syrups or honey, range from 10 to 1000 cP, offering moderate flowability but requiring additional support to maintain position after extrusion. Medium viscosity materials, typically between 1000 and 10,000 cP, include light creams or batters and strike a balance between flowability and shape retention, making them highly suitable for precise deposition in food processing. High viscosity materials, such as aerated creams or melted chocolate, range from 10,000 to 50,000 cP and are preferred for applications requiring well-defined shapes and stable positioning. Higher viscosity materials, ranging from 50,000 to 100,000 cP, such as dense chocolate compounds or thickened fillings, provide exceptional stability but may require specialized systems for extrusion. Very high viscosity materials, exceeding 100,000 cP, approach a semi-solid state and are used when immediate and robust shape stability is essential. These viscosity classifications allow for the precise adjustment and selection of edible materials to achieve the optimal balance between flowability and structural integrity in food processing systems, ensuring consistent product quality and efficiency.

Temperature significantly affects the viscosity of edible materials in food processing. As temperature increases, viscosity generally decreases, making materials more fluid and easier to extrude through nozzles. Conversely, lowering the temperature increases viscosity, enhancing the material's ability to maintain its shape and position after deposition. Precise temperature control is critical to achieve the desired balance, allowing the material to flow smoothly during extrusion while solidifying sufficiently for handling and adhesion to baked goods. This interplay between temperature and viscosity is essential for ensuring consistency, minimizing clogging, and maintaining the structural integrity of the final product.

To extrude edible materials through nozzles, it is often necessary to reduce their viscosity temporarily. This can be achieved by increasing the temperature of the material or altering its composition, such as by incorporating flow-enhancing agents. Reducing viscosity ensures that the material can flow smoothly through the dispenser and minimizes the risk of clogging within the nozzle. However, once the material exits the nozzle, it must maintain its extruded shape and position to form a well-defined deposit on the flat baked goods. This dual requirement-low viscosity for extrusion and higher viscosity for stability-presents a fundamental challenge in designing food processing systems.

In conventional systems, this balance is managed by fine-tuning the temperature of the edible material. By heating the material before extrusion, its viscosity is lowered to facilitate smooth flow. After deposition, rapid cooling is employed to increase the viscosity, allowing the material to solidify and adhere securely to the cookie. However, this approach is not without limitations. Keeping the viscosity too low can lead to difficulties in achieving precise timing and volume control during deposition, necessitating highly precise nozzles. Conversely, excessively high viscosity can result in nozzle clogging, particularly when the nozzles open and close intermittently, interrupting the flow.

The insight addressed in the present disclosure and in particular in certain embodiments thereof is that nozzle clogging can be mitigated by employing a continuous deposition method. By maintaining a steady flow of edible material and avoiding frequent opening and closing of the nozzles, the risk of clogging is significantly reduced or even prevented in total. This allows the viscosity of the material to be increased, ensuring that the extruded shapes remain stable and maintain their position. In this approach, the edible material is deposited in a continuous manner, resembling a printing process. The desired shapes are formed through subsequent cutting or separation into discrete portions, which are then cooled to solidify the material further. This continuous deposition not only improves reliability but also enables higher levels of viscosity, reducing the reliance on excessively precise nozzles and enhancing the structural integrity of the final product.

The deposition can be done through a depositor and one or several hollow channels which connect the main supply of the edible to a corresponding number of nozzles. Once the edible is deposited through the nozzle or nozzles, they can be separated into discrete portions though cutting, or through a scraper, e.g. a rubber scraper element.

In an example the system comprises a deposition means having a number of parallel nozzles for simultaneous deposition of the edible through the nozzles, e.g. for 2, 3, 4, 5, 6, 7, 8, 9 or 10 parallel rows of edible. Once the nozzles have deposited the edible, the edible is cut into discrete portions and may be additionally cooled to further solidify, although the edible already has a high viscosity since there is no need to lower it to prevent clogging of the nozzles, and further solidification may be optional and at least to a lesser degree as compared to known systems.

In a further example, the system comprises deposition means configured to displace the nozzles relative to the conveyor belt during deposition, enabling the edible material to be deposited in predefined shapes. The displacement of the nozzles can be controlled in multiple dimensions, such as along the length or width of the conveyor belt, or even vertically, allowing for complex patterns and shapes to be "printed" directly onto the moving belt. Printing into desired shapes refers to the ability to create intricate and repeatable patterns, such as spirals, stripes, or custom geometries, by synchronizing the movement of the nozzles with the material flow. This is achieved by programming the deposition means with precise motion algorithms that determine nozzle movement speed, direction, and timing. This capability not only supports aesthetic designs but also allows for functional shapes that optimize product assembly, such as creating deposits with specific surface areas or volumes to match corresponding baked goods. The controlled displacement further enables dynamic adjustments to accommodate variations in product designs or recipes, enhancing the flexibility and efficiency of the production system.

In another example the system comprises a rotating rubber or silicone bands with punched-out predetermined shapes. These bands serve as molds for the edible material, which is deposited into the shapes as the band rotates around the edible supply. Excess material is scraped off by a scraper, ensuring clean and precise deposition. This method combines the benefits of continuous deposition with the ability to create defined, multi-layered shapes. Each layer can be deposited sequentially by using nested bands, where each band adds a new layer of edible material onto the previously deposited one. The resulting layered structures can then be cooled to achieve the desired viscosity for robotic handling and placement onto the flat baked goods.

An additional advantage of continuous deposition is its adaptability to various product designs. By adjusting the speed and movement of the nozzles or bands, the system can produce deposits of varying thicknesses, shapes, and compositions. This versatility is further enhanced by the ability to cool the material either during or after deposition, optimizing its viscosity for each stage of the process. The integration of precise temperature control systems ensures that the material achieves the ideal viscosity for extrusion, deposition, and eventual placement, enabling high-quality, consistent sandwich products.

As such, incorporating a technique of the continuous deposition, allows to use other, higher viscosity levels, and since viscosity is a pivotal factor in the handling of viscous edible materials in food processing this is very beneficial. Achieving the right balance between low viscosity for extrusion and high viscosity for stability is critical, and obviating the frequent closing of the valves in the nozzles enables more freedom in selecting the desired level of viscosity, e.g. through different compositions of the edible material and/or elevated or lowered temperature prior to, during and after deposition. The described continuous deposition systems provide an elegant solution to this challenge, allowing for the controlled shaping and solidification of edible materials while minimizing clogging and enhancing production efficiency. These advancements offer a significant improvement over conventional systems, delivering reliable and versatile methods for producing high-quality sandwich products.

In an example, the nozzles of the disposing means are configured to produce multiple layers of edible material, each layer potentially having different colors, flavors, or compositions. The nozzles may be interchangeable or rotatable to vary the layer shapes, allowing for adjustments between broad or narrow deposits. The flow rate of edible material through the nozzles is kept constant, while the nozzle movement speed determines layer thickness.

It may be provided that such a configuration supports customization in product design by enabling multiple edible layers to be deposited in a single production cycle. An effect of this feature is enhanced versatility in the system, accommodating diverse recipes and consumer preferences while maintaining efficiency in production workflows.

In an example, the disposing means includes one or more nested bands made of rubber or silicone with punched-out shapes corresponding to predefined edible material forms. Each band rotates around an edible supply, delivering material into the shapes while excess material is removed by a scraper. Successive bands add layers to previously deposited edible forms, enabling multi-layered edible portions.

It may be provided that the bands create precise edible shapes with consistent dimensions by controlling the deposition within the punched-out areas and removing excess material. An effect of this feature is the production of layered edible deposits with minimal waste and high reproducibility, which improves material utilization and product quality.

In an example, the edible material layers produced by the nested bands are cooled to predefined temperatures suitable for robotic handling. Cooling can occur immediately after deposition or within the band system itself. Each cooling step ensures that the edible material reaches a viscosity level that allows it to be handled and placed onto baked goods without deformation.

It may be provided that cooling integrated into the band system optimizes the viscosity of the edible material for subsequent handling processes. An effect of this feature is precise manipulation of edible layers, reducing errors in placement and ensuring strong adhesion to baked goods, which enhances the structural integrity of the final product.

In an example, the system includes a smart algorithm to optimize the sequence and movement paths of the nozzles or bands during deposition. This algorithm minimizes travel time and material overlap while ensuring complete coverage of the target areas on the conveyor.

It may be provided that optimized nozzle or band movements reduce production cycle times and improve energy efficiency by minimizing unnecessary mechanical actions. An effect of this feature is a faster and more resource-efficient manufacturing process, enabling higher throughput and consistent product quality in high-volume production environments.

In an example, the depositing system may be arranged such that the plurality of flat baked goods supplied by the first conveyor are divided into a first group, with the flat baked goods oriented with one of their two main surfaces facing downwards, and a second group, with the flat baked goods oriented facing upwards. It may be provided that such division of the baked goods into two orientation groups allows the depositing system to prepare the baked goods for later assembly steps without manual flipping. An effect of this feature is a more consistent presentation of the surfaces intended to face the viscous edible material, which improves alignment and visual uniformity of the final product. The controlled orientation also simplifies robotic handling because the gripping surfaces are predictable, resulting in more efficient movement control and lower mechanical complexity.

In an example, the depositing system may be configured such that the predefined viscosity of the viscous edible material is selected so that discrete portions can be picked up and deposited by the robotic manipulator without deforming, while also allowing the viscous edible material to melt together with the flat baked good of the first and second group during the sandwich formation process. It may be provided that the predefined viscosity represents a balance between sufficient structural stability for robotic handling and sufficient fluidity for bonding. An effect of this feature is that each portion maintains its geometric integrity during pick-and-place transfer while still forming a uniform joint once in contact with the baked goods. This viscosity-controlled behavior allows higher precision in dosing, reduces spreading during placement, and improves adhesion without extending the cooling section or requiring additional curing steps.

In an example, the method may be such that the predefined viscosity of the viscous edible material is controlled so that discrete portions of the viscous edible material can be picked up and deposited by the robotic manipulator without deforming, while also allowing the viscous edible material to melt together with the flat baked goods of the first and second group during the sandwich formation process. It may be provided that controlling viscosity in this way enables the method to handle a broad range of edible materials while maintaining reproducibility in product appearance. An effect of this feature is improved reliability in automated sandwich formation, as the edible material neither collapses during transfer nor remains too rigid to bond, resulting in fewer rejected products and consistent structural integrity across production batches.

In an example, the method may be arranged so that the predefined viscosity of the viscous edible material is controlled such that discrete portions of the viscous edible material can be picked up and deposited by the robotic manipulator without deforming, while also allowing the viscous edible material to melt together with the flat baked goods of the first and second group during the sandwich formation process. It may be provided that maintaining this controlled viscosity enables a stable deposition process even at high production speeds, since each discrete portion behaves predictably under the manipulator's mechanical load. An effect of this feature is that the edible material retains its intended shape on the baked good surface, reducing waste and ensuring visual uniformity. The partial melting of the edible material during placement also enhances adhesion without the need for adhesives or extended cooling times, thereby improving throughput and energy efficiency in the depositing process.

It is expressed and the skilled person will appreciate that any embodiment or example of the first aspect is similarly applicable to the other aspects of the invention.

The proposed system in its aspects and examples is designed to handle a variety of viscous edible materials such as fat creams (aerated), marshmallow, jam, compound, and chocolate, as well as materials with inclusions such as rice crispies, broken nuts, or fruit seeds. This allows for a wide range of customizable deposits, accommodating both smooth and textured fillings. The system supports multiple deposit patterns, including single deposits, spot deposits, dotted deposits, stripe deposits, spiral deposits, and more complex formations such as co-deposits and encapsulated deposits, where two different creams can be deposited in a single spot for unique product combinations.

Additionally, the proposed system in its aspects and examples is capable of creating multi-spot deposits to ensure even distribution of cream across the entire surface of rectangular or oblong-shaped baked goods. By integrating multiple deposit stations, the system can handle creams with different dosing temperatures, enabling precise layering of different materials, such as serial strip deposits or serial spot deposits, as seen in applications with varying temperature requirements for each layer. This versatility in deposit methods ensures that the system can produce a wide array of high-quality sandwich products, each with consistent and visually appealing cream distribution.

The proposed system in its aspects and examples system is also capable of producing complex sandwich configurations, such as those with double edible layers or triple cookies, where the assembly includes alternating layers of cookies and viscous edible materials. For instance, configurations like cookie-edible material-cookie-edible material-cookie can be easily achieved, allowing for the creation of multi-layered sandwich products with enhanced texture and flavor variety. This flexibility makes the system ideal for producing both simple and more intricate multi-layered sandwiches.

The above-mentioned and other features and advantages of the invention are illustrated in the following description with reference to the enclosed drawings which are provided by way of illustration only and which are not limitative to the present invention.

### BRIEF DESCRIPTION OF THE DRAWINGS

The present disclosure will be explained in more detail below by means of examples of a device according to the present disclosure shown in the drawings, in which:
Fig. 1 show a system for forming sandwich products according to an aspect the present invention;
Fig. 2 shows a detailed view of the disposing means for edible material according to an aspect the present invention;
Fig. 3 shows an alternative embodiment according to an aspect the present invention with a continuous layer of edible material shaped by a stance;
Fig. 4 is an overview of the embodiment shown in Fig. 3, illustrating edible material handling;
Fig. 5 details the handling of the shaped edible material according to an aspect the present invention;
Fig. 6 shows an alternative embodiment where edible material 30 is stanced and placed onto goods and capped with goods;
Fig. 7 and Fig. 8 provide detailed views of the robotic pick-and-place process for different edible material supplies according to an aspect the present invention;
Fig. 9 shows a further alternative embodiment according to an aspect the present invention wherein multiple continuous layers of edible material are disposed next to each other in a predetermined shape;
Fig. 10a and 10b show yet further alternative embodiments according to an aspect the present invention wherein multiple discrete portions of edible material are sequentially disposed in a predetermined shape;
Fig. 11a and Fig. 11b show examples of finished sandwich products 10' and 10" manufacturable according to an aspect the present invention;
Fig. 12 is a flow diagram of a method 200 for producing sandwich products according to an aspect the present invention.

### DETAILED DESCRIPTION

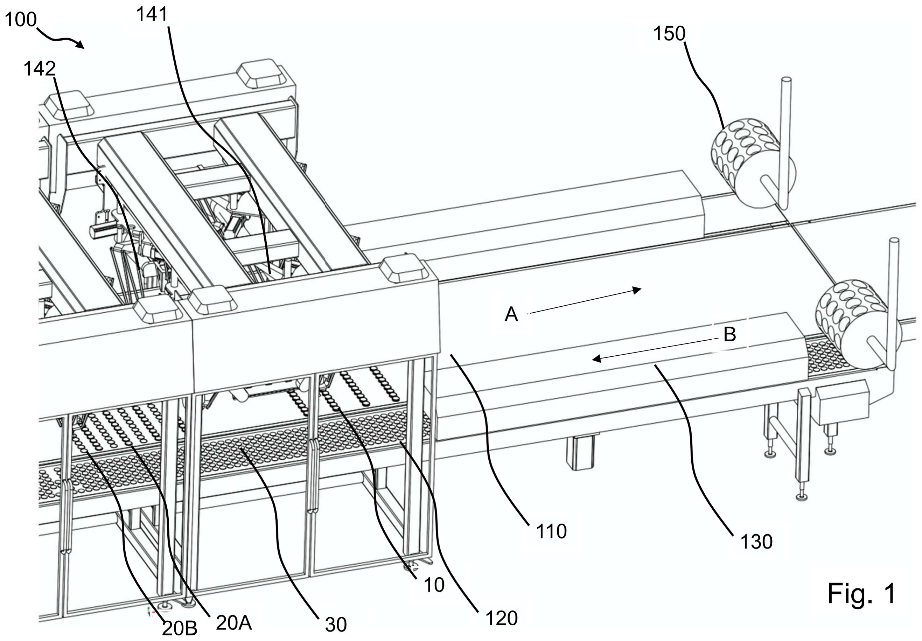

Fig. 1 provides an overview of the sandwich-forming system 100, which automates the production of sandwich products 10 from flat baked goods 20, such as cookies or biscuits. The system comprises a first conveyor 110 and a second conveyor 120, both responsible for transporting the flat baked goods 20 and the edible material 30, respectively.

The first conveyor 110 is a belt conveyor or a chain-driven conveyor, designed to carry flat baked goods 20 in a controlled manner. These baked goods 20 are divided into two groups: a first group 20A and a second group 20B. The goods in the first group 20A are oriented with their bottom surface (which is the view side which might have a certain text, logo, illustration, or such) facing downward, while the goods in the second group 20B are oriented with their bottom surface facing upward. This specific orientation ensures that the first group 20A is ready to receive a layer of viscous edible material 30, while the second group 20B will be used to cap the final sandwich assembly.

The second conveyor 120 moves in a direction B opposite to the movement of the first conveyor 110, direction A, allowing the edible material 30 to be supplied from one end of the system to the point where it is picked up and placed onto the baked goods 20A.

The system also includes robotic manipulators 141 and 142 that handle the picking and placing of the edible material 30 and the flat baked goods 20. Robotic manipulator 141 picks up the shaped edible material 30 after it has been processed, while robotic manipulator 142 picks up the second group of baked goods 20B and places them on top of the edible material 30 to complete the sandwich product 10. These robots are typically equipped with vacuum grippers or mechanical gripping devices designed for precise handling of soft or fragile materials without causing deformation or damage.

Additionally, the edible material 30, which can be cream, chocolate, or another viscous edible substance, is supplied in discrete portions via a rotating disposing means 150, which includes a drum 151. The edible material 30 is brought to the correct viscosity through precise temperature control, allowing it to be manipulated and deposited accurately.

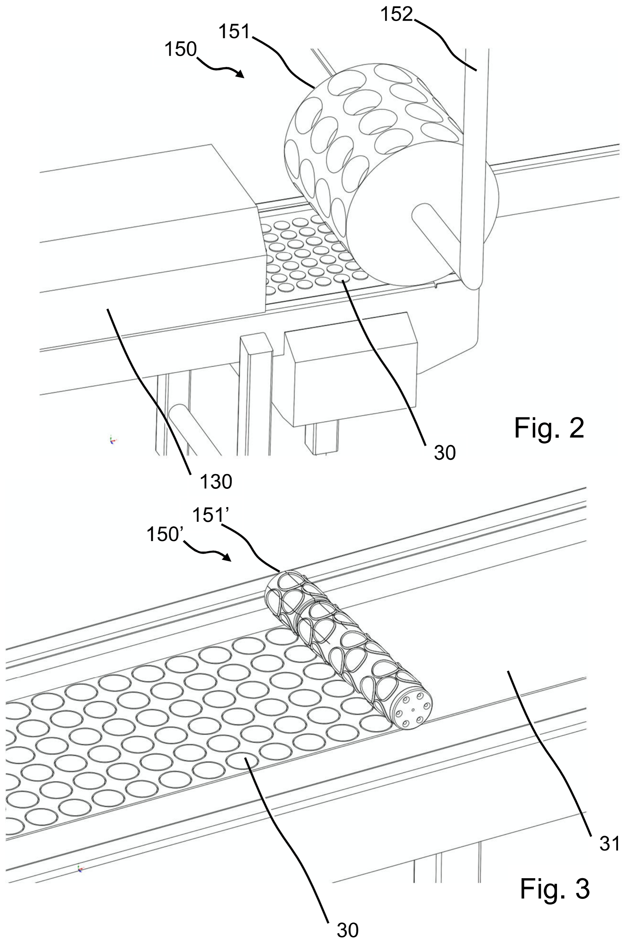

Fig. 2 provides a detailed view of the disposing means 150, which is responsible for delivering discrete portions of edible material 30 onto the second conveyor 120. The drum 151 is configured to rotate and supply portions of edible material 30 from the edible supply 152, ensuring that each portion corresponds to the shape and size of the baked goods 20A. The drum be deposit the edibles into discrete portions as shown and which have a elevated temperature, after which they are cooled by the freezer 130 as shown, they however may also be cooled directly in an integrated embodiment wherein the drum itself cools the edible to such a temperate that the robotic manipulator is able to place the edible onto the goods.

The edible material 30 could be a variety of food substances, such as chocolate, marshmallow, or cream, which require controlled temperatures to maintain a workable viscosity. This viscosity is essential for the material 30 to be easily picked up by the robotic manipulator 141 without deforming. For example, melted chocolate needs to be cooled to around 15-18°C to reach the proper viscosity for handling. Cooling units are positioned near the second conveyor 120 to achieve this.

Fig. 3 illustrates an alternative embodiment in which the edible material 30 is supplied as a continuous layer rather than in discrete portions. The edible material 30 is shaped by a cutting means or rotating stance 151'. This process is ideal for products that require more uniform layers of edible material 30, such as sandwich products with a spread of cream or a uniform chocolate coating. The continuous layer ensures that the edible material 30 adheres evenly to the flat baked goods 20A, maintaining consistency across all sandwich products 10. Like the embodiment shown in Fig. 3, the drum may also cool the edible either fully or partially, or the edible may be provided in a continuous layer 31 as shown which is already cooled.

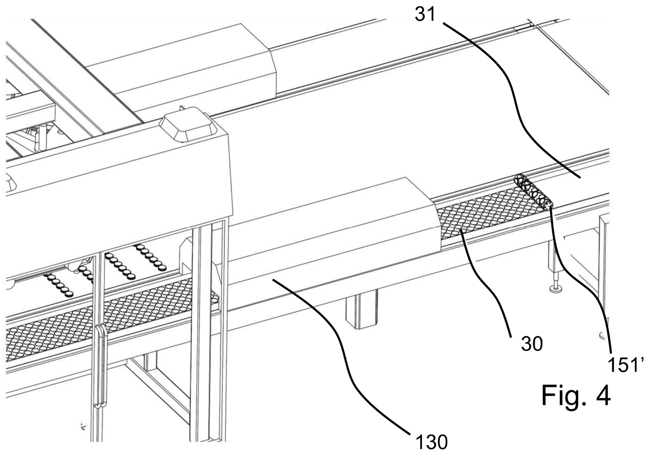

Fig. 4 shows the overall setup of the embodiment in Fig. 3, where the edible material 30 is transported by the second conveyor 120 towards the robotic manipulators. The temperature of the edible material 30 is precisely controlled using cooling units 130 to ensure that it has the required viscosity. The second conveyor 120 may include multiple cooling zones, each designed to gradually reduce the temperature of the edible material 30, making it easier to manipulate.

Once the edible material 30 reaches the robotic manipulator 141, it is picked up and placed onto the flat baked goods 20A of the first group. These robotic manipulators can use vacuum-based gripping systems for delicate edible materials or mechanical gripping devices for more robust materials like thick creams or chocolate spreads.

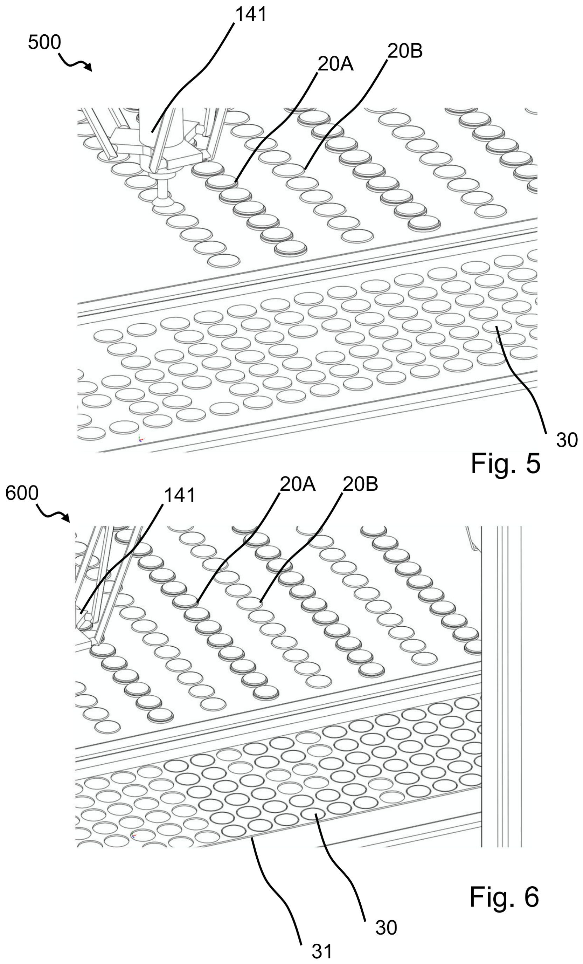

Fig. 5 shows the detailed operation of the robotic manipulator 141 and the first conveyor 110. After the edible material 30 has been shaped and cooled, it is transferred by the robotic manipulator 141 onto the flat baked goods 20A of the first group. This manipulator may be equipped with a vacuum gripper, which allows it to pick up soft, viscous materials without distorting their shape.

The baked goods 20A and the deposited edible material 30 are then transported further along the conveyor, where the second group of flat baked goods 20B is introduced.

Fig. 6 presents an alternative embodiment where the edible material 30 is stanced out from a layer into discrete portions. These portions are then picked up and placed onto the flat baked goods 20A of the first group. The system then picks up the second group of baked goods 20B and caps the sandwich, completing the assembly.

This alternative embodiment highlights the flexibility of the system in handling both continuous layers and stanced portions of edible material 30. This feature allows manufacturers to produce a variety of sandwich products 10, depending on the recipe or the desired outcome.

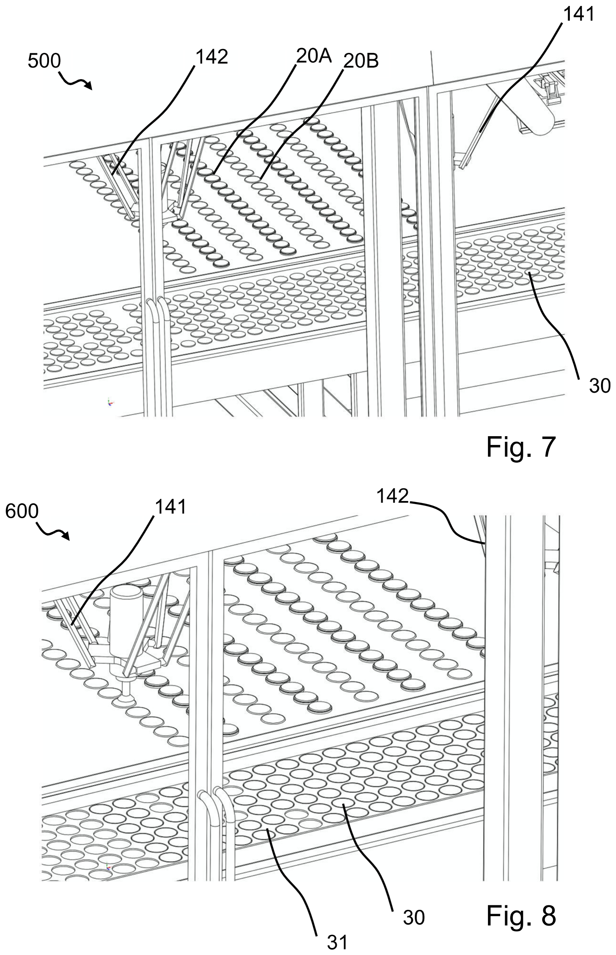

These figures show detailed views of the robotic pick-and-place process for different embodiments of edible material 30. Fig. 7 shows the handling of stanced edible material portions, while Fig. 8 shows the handling of continuous layers. The robotic manipulators 141 and 142 are programmed to pick and place the edible material 30 and the flat baked goods 20 with precision, ensuring uniformity in the final product.

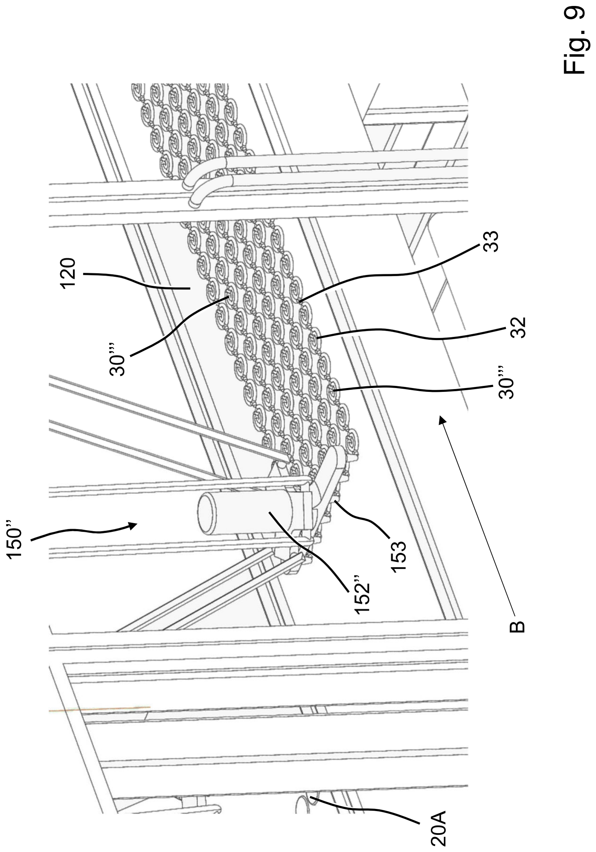

Fig. 9 provides a detailed view of the disposing means 150", which is responsible for delivering multiple continuous layers of edible material 30‴ next to each other in a predetermined shape onto the second conveyor 120. The edible supply 152" comprises multiple nozzles 153, in this embodiment five, wherein each nozzle 153 is configured to dispose a continuous flow of edible material onto the second conveyor 120. The individual layers of edible material 30‴ comprise portions of edible material 32, wherein each portion 32 corresponds to a specific shape customized to the shape and size of the baked goods 20A.The portions of edible material 32 are connected by connecting parts of edible material 33, enabling the nozzles 153 to continuously supply a flow of edible material, thereby preventing obstruction of the nozzles 153.

The edible supply 152" deposits the edible material 30‴ as shown, having an elevated temperature, after which they are cooled by the freezer, they however may also be cooled directly in an integrated embodiment wherein the edible supply 152" itself cools the edible to such a temperate that the robotic manipulator is able to place the edible onto the goods. In a further step, the edible material 30‴ may be cut into discrete portions of edible material 33 and be placed by the robotic manipulator onto the baked goods 20A.

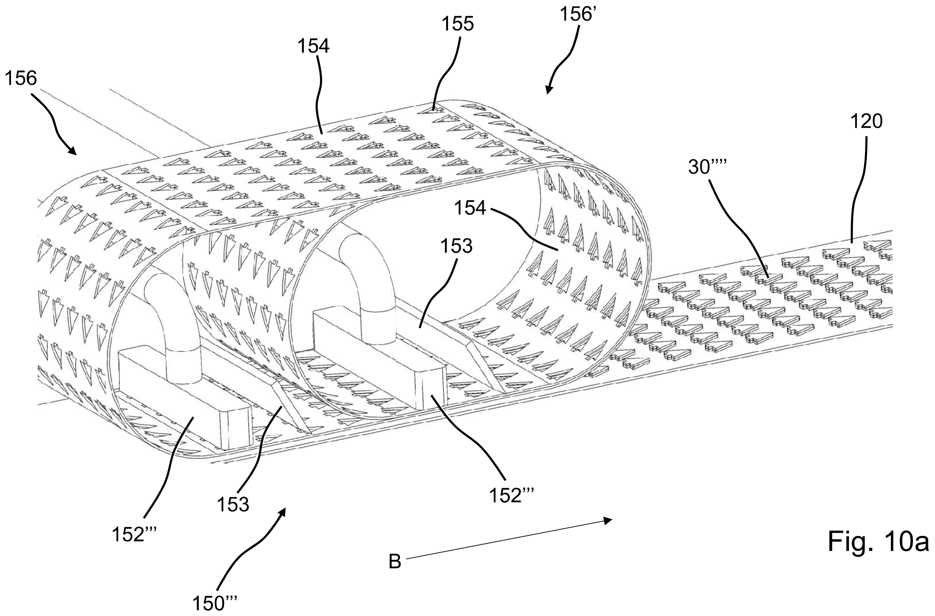

Fig. 10a provides a detailed view of the disposing means 150, which is responsible for delivering multiple discrete portions of edible material 30ʺʺ sequentially disposed on top of each other in a predetermined shape onto the second conveyor 120. The disposing means 150‴ comprises one or more, in this embodiment two, nested disposing units 156, 156'. Each disposing unit 156 comprises a rubber or silicone bands 154 with punched-out predetermined shapes 155. Each band 154 rotates around a corresponding edible supply 152"', for disposing the edible material into the punched-out shapes 155 by the edible supply 152‴ at a location between the edible supply 152‴ and the second conveyor 120. Excessive edible material is scraped by a scraper 153 positioned downstream of the edible supply 152"'.

The first disposing unit 156 disposes a first layer of edible material onto the second conveyor 120, corresponding to the shape and size of the baked goods 20A. The second disposing unit 156' disposes a second layer of edible material onto the first layer of edible material, wherein the second disposing unit 156' is provided within the circumference of the band 154 of the first disposing unit 156, for delivering discrete multi layered portions of edible material 30ʺʺ onto the second conveyor 120. The disposing unit 156, 156' are provided such, that the position of the punched-out shapes 155 are aligned with the position of a previous delivered layer of edible material on the second conveyor 120, thereby disposing the edible material into the punched-out shapes 155 at the correct position and timing on top of the previous layer of edible material.

Successive layers of edible material can be added accordingly, wherein each successive edible supply 152‴ adds a subsequent layer of edible material on top of the already produced edible layer, wherein the shape of each layer corresponds to the punched-out shapes 155 of the corresponding band 154. Excessive edible material is scraped by the scraper 153.

Each disposing unit 156, 156' deposits the edible material 30‴ as shown, having an elevated temperature, after which they are cooled by the freezer, they however may also be cooled directly in an integrated embodiment wherein one or more of the edible supply 152" cools the edible to such a temperate that the robotic manipulator is able to place the edible onto the baked goods 20A.

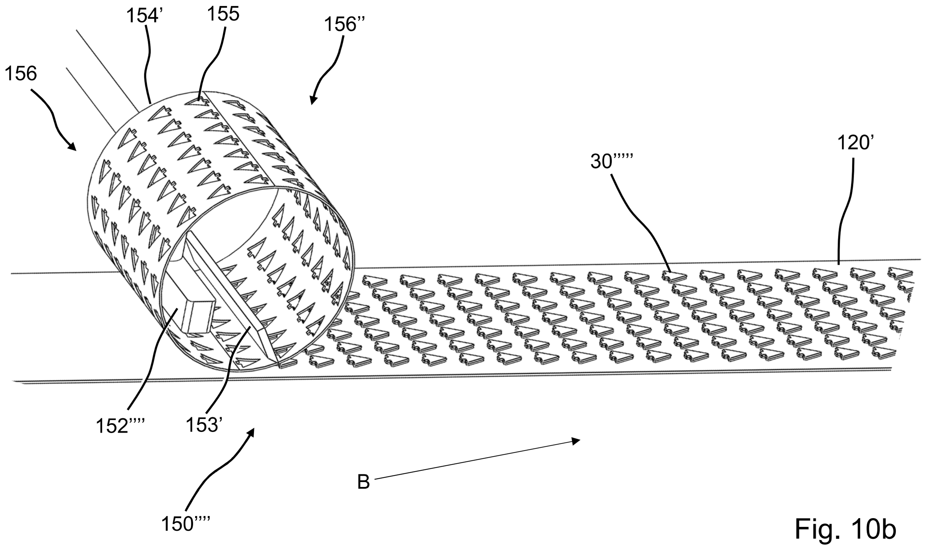

Fig. 10b provides a detailed view of the disposing means 150ʺʺ as an alternative to the embodiment shown in Fig. 10a. The disponing means 150ʺʺ are also responsible for delivering multiple discrete portions of edible material 30ʺ‴ sequentially disposed in a predetermined shape onto the second conveyor 120'. The disposing means 150ʺʺ comprises, in this embodiment one, disposing unit 156"., which is comprised of a metal cylinder 154' with punched-out predetermined shapes 155. The cylinder 154' rotates around a corresponding edible supply 152"", for disposing the edible material into the punched-out shapes 155 by the edible supply 152""at a location between the edible supply 152ʺʺ and the second conveyor 120'. Excessive edible material may be scraped by a scraper 153' positioned downstream of the edible supply 152"".

The disposing means 150ʺʺ shown in Fig. 10b comprises one metal cylinder type of disposing unit 156". In an alternative embodiment however, it may also comprise two or more disposing units 156", positioned next to each other.

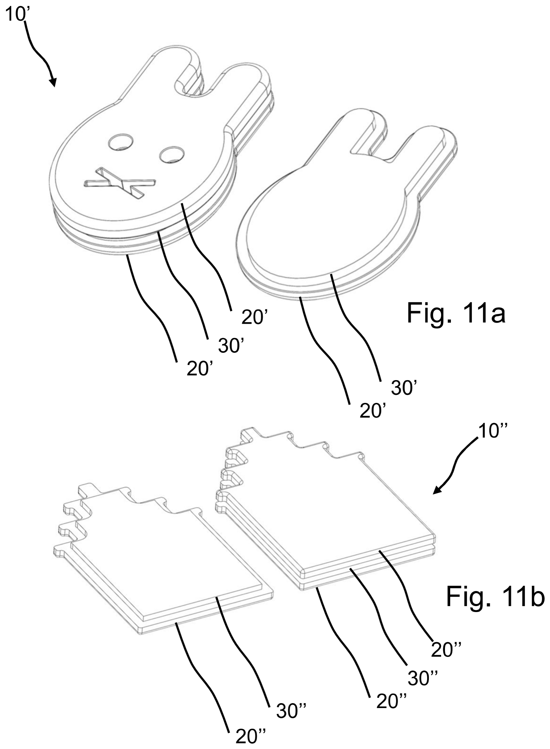

Fig. 11a and Fig. 11b present two examples of completed sandwich products 10' and 10". Fig. 11a shows a complex-shaped sandwich product 10' made with round flat baked goods 20' and a layer of edible material 30' shaped to fit. Fig. 11b shows a more rectangular sandwich product 10" with similarly shaped baked goods 20" and edible material 30". These examples demonstrate the system's versatility in handling different shapes and sizes of baked goods and edible materials. All kinds of shapes and sizes can be handled with the system according to any aspect of the invention as there is no limitation what so ever as in conventional ways of depositing which are only able to deposit droplets or droplet like portions of the edible.

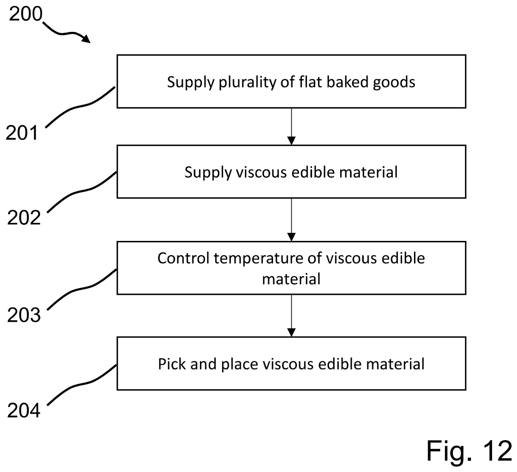

Fig. 12 is a flowchart of the method 200 for producing sandwich products 10. This method involves:
Step 201: Supplying a plurality of flat baked goods 20, such as cookies or biscuits, on a first conveyor 110.
Step 202: Supplying a viscous edible material 30, such as cream, chocolate, or jam, on a second conveyor 120. This material is typically deposited in either discrete portions or as a continuous layer, depending on the desired product.
Step 203: Controlling the temperature of the viscous edible material 30 using cooling means 130 integrated into the second conveyor 120. The cooling zones ensure that the material reaches a predefined viscosity level suitable for handling. For example, chocolate must be cooled to around 15-18°C to maintain the proper consistency for robotic manipulation.
Step 204: Picking up and placing the viscous edible material 30 onto the flat baked goods 20A using a robotic manipulator 141. The manipulator handles the material with precision, ensuring accurate placement without deformation. Finally, the second group of flat baked goods 20B is placed on top to complete the sandwich assembly.

This method ensures efficient, consistent production of sandwich products 10 while maintaining precise control over the handling of delicate or viscous edible materials.

This detailed description thoroughly explains the features, devices, and methods, ensuring it aligns with the rest of the application and provides practical examples where necessary. Let me know if you would like any additional adjustments!
Based on the above description, a skilled person may provide modifications and additions to the method and arrangement disclosed, which modifications and additions are all comprised by the scope of the appended claims.
It will be clear that the intention of the above description is to shed light on the working of possible embodiments of the present invention, and not to limit the scope of protection of the invention. Starting from the description, a person skilled in the art is able to conceive of and use various embodiments that fall within the inventive concept and scope of protection of the present invention.

## Claims

1. A system (100) for forming sandwich products (10) from two or more flat baked goods (20), wherein between the flat baked goods a layer of viscous edible material (30) is deposited, the system comprising:
a first conveyor (110) for supplying a plurality of flat baked goods (20), wherein the plurality of flat baked goods is divided into a first group (20A), with the flat baked goods oriented with one of their two main surfaces facing downwards, and a second group (20B), with the flat baked goods oriented facing upwards;
a second conveyor (120) for supplying the viscous edible material (30);
temperature control means (130) disposed onto the second conveyor (120) and arranged to achieve a predefined viscosity level of the viscous edible material by controlling its temperature;
a first robotic manipulator (141) configured to pick up the viscous edible material (30) from the second conveyor (120) after its viscosity has been adjusted to the predefined level, and to deposit the viscous edible material (30) onto flat baked goods of the first group (20A);
a second robotic manipulator (142) configured to pick up and place flat baked goods of the second group (20B) onto the viscous edible material (30) deposited on the flat baked goods of the first group (20A), thereby forming the sandwich products (10).

2. The system of claim 1, wherein the predefined viscosity of the viscous edible material (30) is controlled such that it can be picked up and deposited by the first robotic manipulator (141) without deforming, while also allowing the viscous edible material (30) to melt together with the flat baked good of the first (20A) and second group (20B) during the sandwich formation process.

3. The system of any one of claims 1 to 2, wherein the second conveyor, for supplying the viscous edible material, operates in a counter-flow direction (B), opposite to the direction of movement (A) of the first conveyor, for supplying the flat baked goods.

4. The system of any one of claims 1 to 3, wherein the first and second conveyors (110, 120) are disposed in parallel, with the second conveyor (120) positioned alongside the first conveyor (110), allowing for integrated and synchronized operation of both conveyors in the sandwich forming process.

5. The system of any one of claims 1 to 4, wherein the viscous edible material (30) is selected from the group consisting of cream, chocolate, jam, and other soft-set edible materials that solidify at a controlled low temperature.

6. The system of any one of claims 1 to 5, wherein the viscous edible material (3) is shaped into discrete portions before being picked up by the robotic manipulator.

7. The system of claim 6, wherein the temperature control means (130) comprises a cooling unit integrated into or adjacent to the second conveyor (120), and wherein the cooling unit comprises multiple cooling zones to gradually reduce the temperature of the viscous edible material.

8. The system of any one of claims 1 to 7, wherein the first (141) and/or second (142) robotic manipulator) comprises a vacuum gripper or a mechanical gripping device.

9. The system of any one of claims 1 to 8, wherein the second robotic manipulator (142) is configured to align the second flat baked good (20B) with the first flat baked good (20A) prior to placement.

10. The system of any one of claims 1 to 9, wherein the predefined viscosity of the viscous edible material (30) is adjusted based on the type of flat baked good (20) to ensure proper adherence during the sandwich formation process.

11. The system of claim 10, wherein the temperature control means (130) is further configured to adjust the viscosity of the viscous edible material (30) based on ambient environmental conditions.

12. The system of any one of claims 1 to **11,** wherein the system further comprises a control unit configured to synchronize the operation of the first and second robotic manipulators (141, 42) with the movement of the first and second conveyors (110, 120).

13. The system of any one of claims 1 to 12, wherein the viscous edible material (30) is deposited in a pattern corresponding to the shape of the flat baked good (20).

14. A method of forming sandwich products (10) from two or more flat baked goods (20), the method comprising the steps of:
- supplying a plurality of flat baked goods (20) on a first conveyor (110), wherein the plurality of flat baked goods (20) is divided into a first group (20A), with the flat baked goods oriented with one of their two main surfaces facing downwards, and a second group (20B), with the flat baked goods oriented facing upwards;
- supplying a layer of viscous edible material (30) on a second conveyor (120);
- controlling the temperature of the viscous edible material (30) using temperature control means (130) disposed onto the second conveyor (120) to achieve a predefined viscosity level suitable for handling;
- picking up the viscous edible material (30) from the second conveyor (120) using a first robotic manipulator (141) after the viscosity has been adjusted to the predefined level;
- depositing the viscous edible material (30) onto flat baked goods of the first group (20A);
- picking up flat baked goods from the second group (20B) using a second robotic manipulator (142) and placing them onto the viscous edible material deposited (30) on the flat baked goods of the first group (20A) to form the sandwich products (10), and wherein the predefined viscosity of the viscous edible material (30) is controlled such that discrete portions of the viscous edible material can be picked up and deposited by the robotic manipulator without deforming, while also allowing the viscous edible material to melt together with the flat baked good of the first and second group (20A, 20B) during the sandwich formation process.

15. A method for depositing a layer of viscous edible material (30) onto flat baked goods (20), the method comprising:
- supplying a plurality of flat baked goods (20) on a first conveyor (110);
- supplying a viscous edible material (30) on a second conveyor (120);
- controlling the temperature of the viscous edible material (30) using temperature control means (130) disposed onto the second conveyor (120) to achieve a predefined viscosity level suitable for handling;
- picking up the viscous edible material (30) from the second conveyor (120) using a first robotic manipulator (141) after the viscosity has been adjusted to the predefined level;
- depositing the viscous edible material (30) onto the flat baked goods (20), and, wherein the predefined viscosity of the viscous edible material (30) is controlled such that discrete portions of the viscous edible material (30) can be picked up and deposited by the robotic manipulator without deforming, while also allowing the viscous edible material to melt together with the flat baked good of the first and second group (20A, 20B) during the sandwich formation process.
